# EUROPEAN PATENT SPECIFICATION

(11) **EP 2 718 520 B1**
(45) Date of publication and mention of the grant of the patent: **10.02.2016**
(21) Application number: 12727836.4
(22) Date of filing: 08.06.2012
(51) Int. Cl.: E04H 12/12, E04H 12/34

(54) **JOINT FOR CONCRETE TOWER SECTIONS**
BEFESTIGUNGSANORDNUNG FÜR TURMELEMENTE AUS BETON
ENSEMBLE DE FIXATION POUR DES ÉLÉMENTS DE TOURS EN BÉTON

(30) Priority: 09.06.2011 ES 201130961
(43) Date of publication of application: 16.04.2014
(73) Proprietor: Inneo Torres, S.L., 28020 Madrid (ES); Esteyco S.A.P., 28036 Madrid (ES)
(72) Inventor: FERNÁNDEZ GÓMEZ, Miguel Ángel, E-28036 Madrid (ES); JIMENO CHUECA, José Emilio, E-28020 Madrid (ES)
(74) Representative: Botella Reyna, Antonio
(86) International application number: PCT/EP2012/060947
(87) International publication number: WO 2012/168467

(56) References cited:
- EP-A1- 2 253 782
- WO-A1-2011/058158
- ES-U- 1 060 629

## Description

### FIELD OF THE INVENTION

The present invention relates to a socket-projection fixing assembly, internally reinforced, for a horizontal wet joint between two cylindrical prefabricated concrete sections for a wind turbine tower, or between a cylindrical prefabricated concrete section and a concrete foundation for a wind turbine tower. Although hereinafter reference is made solely to the horizontal wet joint between two sections for the sake of simplicity, this in any way limits the scope of the invention.

The principal sector of application of the invention is therefore the building sector, particularly concrete structures, in the renewable or green power generating industry, specifically wind power.

### BACKGROUND TO THE INVENTION

A method is known for erecting wind turbine towers on the basis of cylindrical sections which are connected to each other coaxially, one above the other, thus creating horizontal joints between successive sections. Said cylindrical sections may in turn be pre-formed by curved elements or voussoirs which are joined side by side, thus creating vertical joints, until a section is closed.

Said horizontal joints are normally wet joints, i.e. they normally comprise material which is applied in a liquid or plastic form in the ring, and is left to cure until the corresponding successive sections are fastened together in a substantially hermetic manner. The ring is the space in the shape of a circular crown which is located between the two facing edges of successive sections.

However, because of the considerable stresses imposed by the enormous dimensions and heavy weights of the sections to be connected, said horizontal wet joints are often supplemented by internally reinforced, socket-projection fixing devices, i.e. fixing devices with reinforcement arranged essentially inside said sections and distributed between two successive sections so that it is embedded in the concrete of one of said successive sections and accommodated in a duct of the other of said successive sections and anchored thereto to secure both sections together. Said internal reinforcement may be a passive reinforcement which is simply stretched and anchored to improve to some extent the behaviour of the joint when said joint is subjected to tension, but which increases the length of the erection process because it requires a minimum time for setting of the anchoring mass of a horizontal wet joint before forming the next horizontal wet joint; or said internal reinforcement may be an active reinforcement which is anchored and stretched to improve substantially the behaviour of the joint when said joint is subjected to tension, but which requires additional installation operations.

In any case, the voussoir or the section having the reinforcement partially embedded therein (with a portion projecting therefrom) is called a male voussoir or male section, and the voussoir or the section having a space for accommodation in said portion projecting from the male voussoir or the male section is called the female voussoir or female section. On the other hand, a voussoir or section having both reinforcements partially embedded in it and ducts for receiving reinforcements partially embedded in another voussoir or section, is called a mixed voussoir or section.

By way of example, document ES 1060629 U discloses sheaths 4 previously fastened to the concrete of a lower section, which sheaths 4 receive bars 5 partially embedded in the concrete of an upper section so that they have a portion which projects outside said upper section, said sheaths 4 being filled with mortar. In this manner bars 5 (reinforcement) are adhered by means of mortar to sheaths 5 integral with the concrete. In this case the reinforcement is passive, not stretched, and normally in the form of a corrugated bar which acts once the mortar has set.

Alternatively, and also by way of example, document EP 2253782 A1 discloses a system of connection between two adjacent prefabricated sections 2, one of said sections 2 being provided internally with a pretensioned cable 4 (reinforcement) partially embedded in the concrete with a portion 4a of cable projecting outside of it and housed in a duct 24 provided in the other of said sections 2, which has a face which includes an enlargement 21 which leads duct 24 to an outlet through which said portion 4a emerges and is anchored by a stop 22. In this case the reinforcement is active and is stretched, after its installation, in order to compress the concrete, and which may be in the form of a bar (or bolt) or cable.

However, it is necessary to provide a horizontal wet joint which, on the one hand, has internal reinforcements for improving the behaviour of the joint when it is subjected to tension and which, on the other hand, involves the smallest possible number of additional operations and extends to the least possible extent the duration of the erection process.

### SUMMARY OF THE INVENTION

The object of the invention is therefore to provide an internally reinforced, socket-projection fixing assembly for a horizontal wet joint between two cylindrical prefabricated sections of concrete for a wind turbine tower, which involves the least possible number of additional operations and which extends to the least possible extent the duration of the process of erecting said tower.

Specifically the invention relates to an internally reinforced, socket-projection fixing assembly for a horizontal wet joint for a wind turbine tower which comprises at least one socket-projection fixing device with an active internal reinforcement and at least one socket-projection fixing device with a passive internal reinforcement so that said active internal reinforcement and said passive internal reinforcement each include a portion (hereinafter referred to as "embedded portion") which is embedded in a first section of said cylindrical prefabricated sections, and a portion (hereinafter referred to as "projecting portion") which projects from said first section and is housed in a duct in a second section of said cylindrical prefabricated sections, wherein said active internal reinforcement includes means of tightening which are arranged in said projecting portion of said active internal reinforcement and against a supporting surface of one of said cylindrical prefabricated sections so that said active internal reinforcement is anchored to said supporting surface and stretched by means of said tightening means, and wherein said passive internal reinforcement includes cured material which is arranged at least partially around said projecting portion of said passive internal reinforcement and adhered to the inside of the passive reinforcement duct in which is arranged said projecting portion of said passive internal reinforcement.

Of course at least one of said first and second sections may be formed by voussoirs.

Said tightening means may comprise a nut which is threaded onto a threaded end of said active internal reinforcement and which is tightened optionally with the insertion of an anchor plate and/or a curable levelling and/or supporting material against said supporting surface.

A partial pre-tensioning is preferably used in said horizontal wet joint, i.e. said active internal reinforcement is stretched so that it exerts a force which pre-compresses said horizontal wet joint and prevents the de-compression of said horizontal wet joint for applied loads below a predetermined load threshold, which is in turn lower than the maximum design load. From said load threshold, i.e. for applied loads higher than said load threshold and up to said maximum operating load, the de-compression of the joint may takes place and said passive internal reinforcement then interacts by resisting the tensions to which the joint may be subjected. It enables the pre-tensioning of the joint resulting from the stretching of the active reinforcement(s) to be adapted to the normal or fatigue loads and allows the passive reinforcement (s) to be used for the extreme or breaking loads, by benefiting from and combining the characteristics and advantages of each type of reinforcement.

If said first section and said second section comprise voussoirs, it is preferred that said socket-projection fixing assembly, internally reinforced, according to the invention, comprises a number of socket-projection fixing devices with active internal reinforcement which is at the same time a multiple of the number of voussoirs in the first section, a multiple of the number of voussoirs in the second section and a divisor of the total number of socket-projection fixing devices, i.e. by including both socket-projection fixing devices with an active reinforcement and socket-projection fixing devices with a passive reinforcement. Such an arrangement provides an even distribution of the socket-projection fixing devices with an active internal reinforcement, and an identical distribution of the socket-projection fixing devices in each voussoir forming each of said first and second sections.

In the case of a socket-projection fixing device with active internal reinforcement of the socket-projection fixing assembly according to the invention, and if said tightening means comprise an anchor plate and said second section is arranged above said first section, said anchor plate may then comprise one or more bores which may act as venting ducts for the air outlet during the insertion of curable material in said active reinforcement duct or in a sheath arranged inside said active reinforcement duct.

In the case of a socket-projection fixing device with active internal reinforcement of the socket-projection fixing assembly according to the invention, said second section preferably has a working facing which includes a hole in correspondence with the distal end of said projecting portion of said active internal reinforcement, said hole having a depth such that it extends at least to said active reinforcement duct in correspondence with said distal end of said projecting portion of said active internal reinforcement, with dimensions such that said tightening means can be housed inside said hole, thus allowing both the application of said tightening means to said distal end of said projecting portion of said active internal reinforcement and the anchoring and tensioning of said active internal reinforcement by means of said tightening means. In this case, said supporting surface is located in the inner wall of said hole. Due to the prefabricated nature of said cylindrical sections the geometry of said hole must be such that a suitable release angle is provided. Moreover, if said tightening means comprise an anchor plate, said supporting surface of said hole is preferably formed with a suitable flatness to allow direct support of the anchor plate on said supporting surface without the need for intermediate parts or products such as levelling and supporting mortars, and consequently to allow the immediate at least partial tightening of the tightening means during the installation process, although curable materials for said supporting face may of course be used additionally or alternatively.

In the case of a socket-projection fixing device with passive internal reinforcement of the socket-projection fixing assembly according to the invention, said passive reinforcement duct may include a sheath, possibly corrugated, which receives said projecting portion of said passive internal reinforcement, and which is filled with curable material (mortar, resin or similar). Moreover, if said second section is arranged above said first section, said passive reinforcement duct may include a sheath, possibly corrugated, which receives said projecting portion of said passive internal reinforcement, and said second section may have a working facing which includes a hole in correspondence with the distal end of said projecting portion of said passive internal reinforcement, said hole having a depth such that it at least extends to said passive reinforcement duct in correspondence with said distal end of said projecting portion of said passive internal reinforcement, and said sheath having an extension which extends along said hole until it reaches at least the inlet of said hole. Said sheath may then be filled with a curable material (mortar, resin or similar) via said filling hole and said extension, which provides the fixing of said passive internal reinforcement in the sheath and anchorage by adhesion of said passive internal reinforcement. The ring formed between said cylindrical prefabricated sections may also be filled with a curable material (mortar, resin or similar) via said filling hole and said extension.

Said hole does preferably not open to the facing opposite the working facing, and said working facing is preferably the facing orientated towards the inner space enclosed by said second section.

The combination of active internal reinforcement and hole provides, during the installation, convenient access to the active reinforcement via the existing hole. This allows the immediate, simple anchorage of the active reinforcement by means of said tightening means in order to minimise its influence on the times for the process of installation of the corresponding tower. Moreover, the hole may finally be filled with curable material (grout material or similar), thereby embedding the entire active internal reinforcement with the tightening means, and providing reliable, permanent protection basically without any maintenance of any of the parts, particularly protection against corrosion of the metal parts which are normally used in the tightening means of active reinforcements. In this case, said hole is filled with said curable material, preferably until a curable material surface is flush with the surface surrounding the prefabricated section in order to eliminate as far as possible any structural discontinuity. Moreover, if a sheath is provided in said active reinforcement duct for said projecting portion of said active reinforcement, said sheath can then be filled with a curable material (mortar, resin or similar).

The combination of active/passive internal reinforcement and hole may also make it easier to ensure that the vertical development of said active/passive internal reinforcement (and hence the vertical development of the associated duct) is not parallel with the generating line of said cylindrical prefabricated sections. It is known that the cylindrical sections for the erection of wind turbine towers may be tapered in the ascending direction to provide an essentially conical tower. In this case, said cylindrical prefabricated sections will be generated by a generatrix inclined towards the axis of revolution in the ascending direction, and to facilitate the insertion of said projecting portion of said active/passive internal reinforcement in said corresponding duct during an operation of vertical lowering of one of said cylindrical prefabricated sections onto another section, said active/passive internal reinforcement may not be parallel with the generatrix, preferably being parallel with the vertical axis of revolution. The combination of active/passive internal reinforcement and hole may also make it easier for said active/passive internal reinforcement to be arranged essentially centred in the thickness of said cylindrical prefabricated sections.

Be that as it may, the duct will have a specific geometry depending on the characteristics of each case. For example, in the case of a socket-projection fixing assembly according to the invention, with an active reinforcement in the form of a cable, the duct may then have a curved vertical development.

With a socket-projection fixing assembly according to the invention, which has socket-projection fixing devices with a passive reinforcement and socket-projection fixing devices with an active reinforcement, an optimum balance may be achieved between structural efficiency and the speed of installation and fixing. If only socket-projection fixing devices with passive reinforcement are used, the installation can be made very quickly by assembling succeeding sections without waiting for the curable material to set. However, safety during the installation is then relatively low, as is the structural efficiency in the final situation. If only socket-projection fixing devices with active reinforcement are used, the installation may be made relatively safer by anchoring at least some of the reinforcements as the sections are assembled, and the structural efficiency in the final situation will be high once all the tightening means are finally tightened. However, the speed of installation is relatively slow and the space required to house the active reinforcement is relatively large. By combining socket-projection fixing devices with passive reinforcement and with active reinforcement in the same horizontal wet joint, the installation of the corresponding tightening means for anchorage in the corresponding holes provides, with minimum tightening torque, a provisional fastening of the sections immediately after installing one tower section on the other, which secures the joint until the process of filling with curable material is completed. Once said curable material reaches its specified strength, stretching of the active reinforcements may commence. It is important to provide a fast, efficient method for provisionally securing the joint, thereby allowing the subsequent installation of several sections with a high degree of security and enabling the work of filling with curable material to a later phase and preventing the work of installing sections from slowing down, which could involve lifting means incurring high costs.

It is known that in the rings of horizontal wet joints between prefabricated sections with a concrete base for the erection of wind turbine towers, sealing profiles can be arranged to contain the curable material intended to seal the joint. These sealing profiles are normally two essentially circumferential profiles arranged concentrically on the upper edge of the lower section of the joint, one of which is arranged in the vicinity of the inner facing of the sections of the joint and the other of which is arranged in the vicinity of the outer facing of the sections of the joint.

The socket-projection fixing assembly according to the invention may include a translucent sealing profile which allows visual inspection of the feed of the curable material during the process of filling the joint, facilitating inspection and monitoring of the filling operation. Alternatively, the socket-projection fixing assembly according to the invention may include a thixotropic (highly viscous) curable material which does not require sealing profiles.

Whether it has a sealing profile of one type or the other, or whether it has no sealing profile, the socket-projection fixing assembly according to the invention may include sectorisation means for the ring, i.e. means which form separate compartments along the perimeter of the ring and which enclose one or more socket-projection fixing devices of the socket-projection fixing assembly according to the invention, in order to allow separate phases of filling of the ring and hence greater control of the filling operation. Said sectorisation means may be profiles similar to said sealing profiles arranged simply in the radial direction instead of in the circumferential direction.

The invention also relates to a process of installing a socket-projection fixing assembly as previously described, which includes the steps of:
a) providing a first cylindrical prefabricated section of concrete for a wind turbine tower and a second cylindrical prefabricated section of concrete for a turbine tower,
b) installing said first and second cylindrical sections within a mutual coaxial relationship so that said projecting portions of said internal reinforcements and said corresponding ducts face each other and are aligned with each other,
c) bringing said first and second cylindrical sections closer together so that said projecting portions of said internal reinforcements are housed in said corresponding ducts until said first and second cylindrical sections are adjacent to each other,
d) applying said tightening means to the active reinforcement(s) of said socket-projection fixing assembly,
e) applying curable material to the passive reinforcement(s) of said socket-projection fixing assembly,
f) stretching the active reinforcement(s) of said socket-projection fixing assembly by tightening said tightening means;
wherein in addition, in step f, the active reinforcement(s) of said socket-projection fixing assembly are stretched by tightening said tightening means so that said horizontal wet joint is subjected to a partial pre-tensioning, i.e. the active reinforcement(s) of said socket-projection fixing assembly are stretched so that they exert a force which pre-compresses said horizontal wet joint so as to prevent the decompression of said horizontal wet joint for applied loads lower than a predetermined load threshold which is in turn lower than the maximum operating load and, from said load threshold, i.e. for applied loads higher than said load threshold and up to said maximum operating load, the passive reinforcement(s) of said socket-projection fixing assembly interact in the resistant function by absorbing the tensions to which the joint may be subjected.

Said procedure for installing a socket-projection fixing assembly according to the invention also includes the application of a curable material to the ring formed between said first and second cylindrical sections, preferably in step d).

Moreover, in said procedure for the installation of a socket-projection fixing assembly according to the invention, in step c), a protective cover is optionally used for the distal end of at least one reinforcement, in the shape of a cone, which also enables said protective cover to act as a guiding mechanism and as a mechanism of separation between the reinforcement and the duct of said female parts, preferably in the form of a sheath.

It must be noted that throughout this document the term "distal" is intended to indicate a position that is relatively further from the point at which the embedded portion and the projecting portion of the corresponding reinforcement coincide, and the term "proximal" is intended to indicate a position relatively closer to the point at which the embedded portion and the projecting portion of the corresponding reinforcement coincide.

### BRIEF DESCRIPTION OF THE DRAWINGS

These and other characteristics and advantages of the invention will become clear from the following description of an embodiment of the invention, given solely by way of non-limiting example, with reference to the accompanying drawings, in which:
Figure 1 shows an elevation of a wind turbine tower which includes a horizontal wet joint provided with a socket-projection fixing assembly according to the invention;
Figure 2 shows a cross-sectional view along line A in Figure 1 in correspondence with said horizontal wet joint provided with a socket-projection fixing assembly according to the invention;
Figure 3 shows a longitudinal cross-section along line I-I in Figure 2 representing a socket-projection fixing device with a passive internal reinforcement, and a longitudinal cross-section along line II-II in Figure 2 representing a socket-projection fixing device with an active internal reinforcement;
Figure 4 shows a longitudinal cross-section I'-I' of a socket-projection fixing device with a passive internal reinforcement as an alternative to a socket-projection fixing device with a passive internal reinforcement as shown in Figure 3, cross-section I-I, and a longitudinal cross-section II'-II' of a socket-projection fixing device with an active internal reinforcement as an alternative to the socket-projection fixing device with an active internal reinforcement shown in Figure 3, cross-section II-II;
Figure 5 shows a longitudinal cross-section of an assembly of a socket-projection fixing device with a passive internal reinforcement and a socket-projection fixing device with an active internal reinforcement as an alternative to the socket-projection fixing devices shown in Figure 3; and
Figure 6 shows a longitudinal cross-section of an additional assembly of a socket-projection fixing device with a passive internal reinforcement and socket-projection fixing device with an active internal reinforcement as an alternative to the socket-projection fixing devices shown in Figure 3.

### DETAILED EXPLANATION OF THE INVENTION

In the figures the same or similar parts are denoted by the same reference numeral.

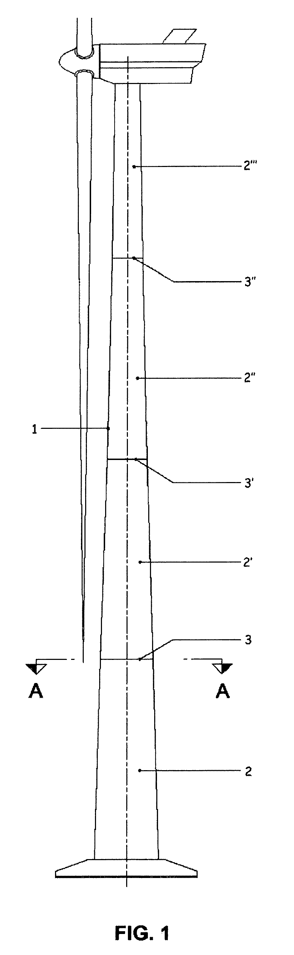

Figure 1 shows a wind turbine tower 1 which has four successive cylindrical concrete prefabricated sections 2, 2', 2'', 2'''. A respective horizontal wet joint 3, 3', 3" is formed between each couple of successive sections, which joint comprises a respective socket-projection fixing assembly according to the invention, i.e. said tower includes three horizontal wet joints 3, 3', 3" and three socket-projection fixing assemblies according to the invention (said socket-projection fixing assemblies according to the invention not shown in Figure 1).

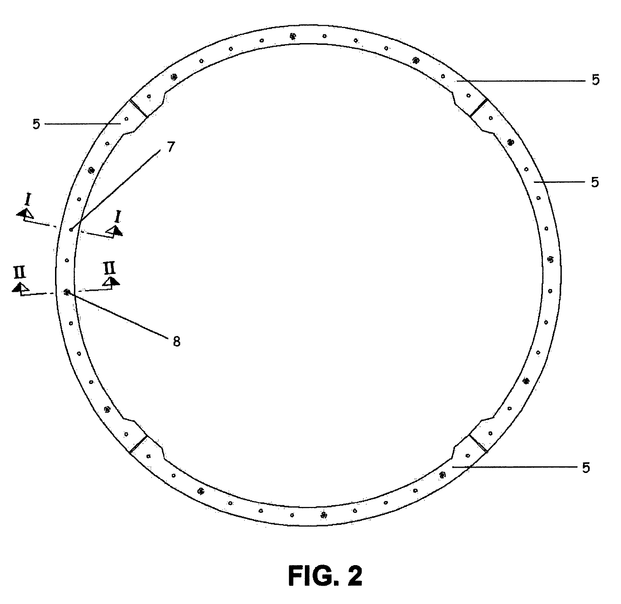

Figure 2 shows a cross-sectional view of said tower 1 in correspondence with the lower horizontal wet joint 3 between a lower section 2 and an upper section 2', to illustrate the respective socket-projection fixing assembly according to the invention and lower section 2. Said socket-projection fixing assembly according to the invention of said lower horizontal wet joint 3 comprises, in this specific example, thirty six socket-projection fixing devices with a passive internal reinforcement 7 (only one of which is referenced in Figure 2 for the sake of clarity) and twelve socket-projection fixing devices with an active internal reinforcement 8 (only one of which is referenced in Figure 2 for the sake of clarity). Said lower section 2 is formed by four voussoirs 5, which means that the number of devices with an active reinforcement 8 is at the same time a multiple of the number of voussoirs 5 in lower section 2 and the divisor of the total number of devices. The number of devices with an active reinforcement 8 is also a multiple of the number of voussoirs 6 in upper section 2', upper section 2' being formed for this purpose by 1, 2, 3, 4, 6 or 12 voussoirs 6.

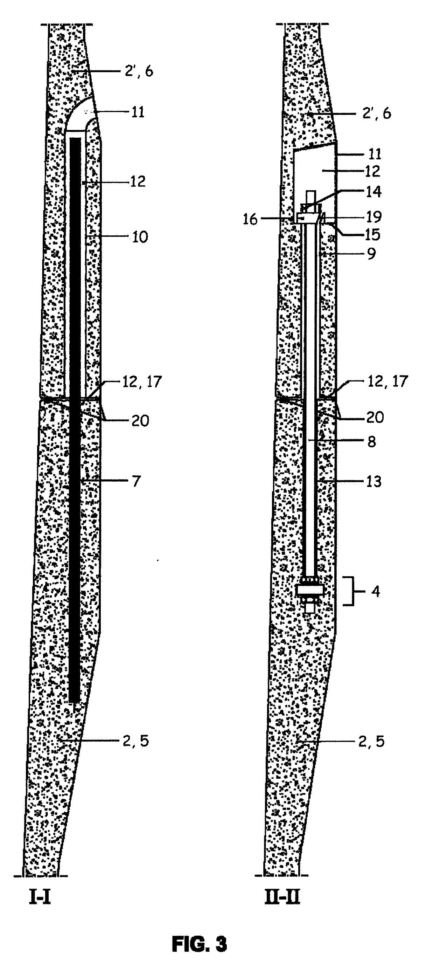

Figure 3 shows a longitudinal section of tower 1 which illustrates said device with a passive reinforcement 7 (cross-section I-I) and a longitudinal section of tower 1 which illustrates said device with active reinforcement 8 (cross-section II-II).

Specifically Figure 3, cross-section I-I, shows a device with a passive reinforcement 7 for fixing a lower voussoir 5 prefabricated on a concrete base for the erection of wind turbine towers and an upper voussoir 6 prefabricated on a concrete base for the erection of wind turbine towers.

Said passive reinforcement 7, in the form of a corrugated bar, is partially embedded in said lower voussoir 5 so that said passive reinforcement 7 has a lower portion actually embedded in said lower voussoir 5 and an upper portion which projects from said lower voussoir 5. Said upper portion of said passive reinforcement 7 is housed in a duct 10 of passive reinforcement made in said upper voussoir 6. One face of said upper voussoir 6 includes a hole 11 in correspondence with the distal end of said upper portion of said passive reinforcement 7, said hole 11 having a curved development until it reaches said duct 10 of passive reinforcement in correspondence with said distal end of said upper portion of said passive reinforcement 7. Said hole 11 enables a filling material to be inserted in the form of mortar 12, which fills said hole 11, said duct 10 of passive reinforcement and ring 17 formed between said lower voussoir 5 and upper voussoir 6, said passive reinforcement 7 being anchored to said upper voussoir 6.

Figure 3, cross-section II-II, shows a device with active reinforcement 8 for fixing said lower voussoir 5 and said upper voussoir 6.

Said active reinforcement 8, in the form of a bar or bolt with threaded ends, is partially embedded in said lower voussoir 5 so that said active reinforcement 8 has a lower portion actually embedded in said lower voussoir 5 and an upper portion which projects from said lower voussoir 5. Said upper portion of said active reinforcement 8 is housed in a duct 9 of active reinforcement made in said upper voussoir 6. One face of said upper voussoir 6 includes a hole 11 in correspondence with the threaded distal end of said upper portion of said active reinforcement 8, said hole 11 having a depth such that it extends to said duct 9 of active reinforcement in correspondence with said threaded distal end of said upper portion of said active reinforcement 8. Said hole 11 provides access to a plurality of tightening means 14, 16 applied to said threaded distal end of said upper portion of said active reinforcement 8 against one face supporting face 15 of said hole 11. Said tightening means comprise a nut 14 and a plate 16, said nut 14 being threaded onto said threaded distal end of said upper portion of said active reinforcement 8 and said plate 16 being inserted between said nut 14 and said supporting face 15, said plate 16 also having a plurality of drain ducts 19 which provide a fluid communication between said duct 9 of active reinforcement and said hole 11.

Said device with active reinforcement 8 also comprises a plurality of anchoring means 4 applied in a fixed manner to the threaded distal end of said lower portion of said active reinforcement 8 and a sheath 13 arranged around said lower portion of said active reinforcement 8 so that said active reinforcement 8 can be expanded or shrunk inside said sheath 13 and inside said active reinforcement duct 9 by the actuation of said nut 14 for stretching said active reinforcement 8.

Said hole 11 also enables a filling material to be inserted in the form of mortar 12, which fills said hole 11, said active reinforcement duct 9 and ring 17 formed between said lower voussoir 5 and upper voussoir 6.

As can be seen in Figure 3, both in cross-section I-I and in cross-section II-II, the horizontal wet joint 3 includes two sealing profiles 20 which delimit said ring 17 and contain said mortar 12.

In the embodiment shown in Figures 1, 2 and 3, the following parameters may be used specifically:
- 4 voussoirs in lower section 2
- 4 voussoirs in upper section 2'
- 12 positions of active reinforcement 8
- 36 positions of passive reinforcement 7
- Diameter of lower joint 3: 7 m
- The joint is dimensioned to be able to withstand with a sufficient degree of safety a maximum design torque not exceeding 60000 KNm:
- The partial pre-tension of the joint, together with the inherent weight of tower 1 and the wind turbine in its head, provides a compressive force in the joint which presents it from decompressing at torques below 25000 KNm.
- Thus the aim is the joint to remain compressed at all times under normal or fatigue loads. Under unusually high or extreme loads the joint may be subjected to tensions which passive reinforcements 7 are designed to resist.

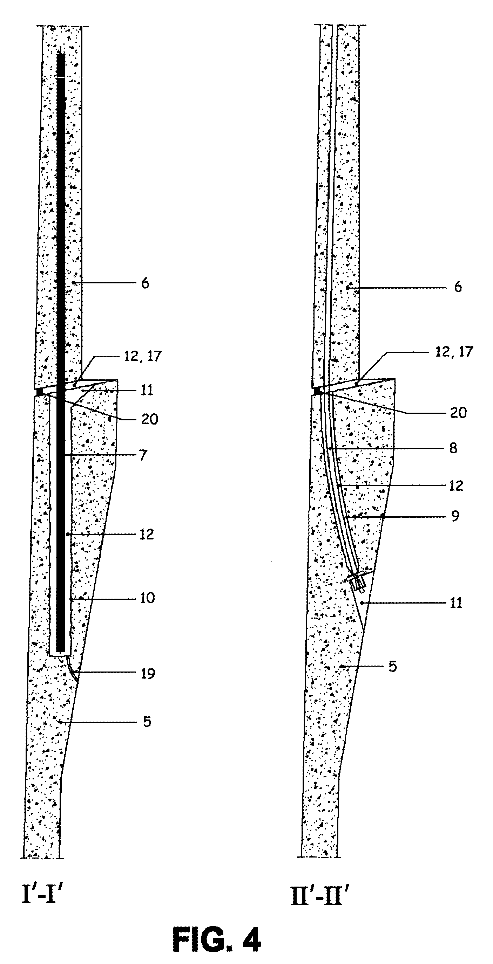

Figure 4 shows a longitudinal section I'-I' of a socket-projection fixing device with passive internal reinforcement 7 as an alternative to the device in Figure 3, cross-section I-I, and a longitudinal section II'-II' of a socket-projection fixing device with active internal reinforcement 8 as an alternative to the device in Figure 3, cross-section II-II.

Specifically Figure 4, section I'-I', shows a device with passive reinforcement 7 for fixing a lower voussoir 5 prefabricated on a concrete base for the erection of wind turbine towers and an upper voussoir 6 prefabricated on a concrete base for the erection of wind turbine towers.

Said passive reinforcement 7, in the form of a corrugated bar, is partially embedded in said upper voussoir 6 so that said passive reinforcement 7 has an upper portion actually embedded in said upper voussoir 6 and a lower portion which projects from said upper voussoir 6. Said lower portion of said passive reinforcement 7 is housed in a passive reinforcement duct 10 made in said lower voussoir 5. The upper edge of said lower voussoir 5 includes a hole 11 in correspondence with the proximal end of said lower portion of said passive reinforcement 7, said hole 11 having an inclined development until it reaches laterally said passive reinforcement duct 10 in correspondence with said proximal end of said lower portion of said passive reinforcement 7. Said hole 11 facilitates the insertion of a filling material in the form of mortar 12, which fills said hole 11, said passive reinforcement duct 10 and ring 17 formed between said lower voussoir 5 and voussoir 6, said passive reinforcement 7 being anchored to said lower voussoir 5. The distal end of said passive reinforcement duct 10 has a drain duct 19 which provides a fluid communication between said passive reinforcement duct 10 and the surrounding area. The purpose of said drain duct 19 at the basis of said passive reinforcement duct 10 is to allow the complete drainage of water from said passive reinforcement duct 10 before filling with mortar. It will generally be plugged before proceeding with filling with said mortar 12.

Figure 4, section II'-II', shows a device with active reinforcement 8 for fixing said lower voussoir 5 and said upper voussoir 6.

Said active reinforcement 8, in the form of a pre-tensioning cable, is partially embedded in said upper voussoir 6 so that said active reinforcement 8 has an upper portion actually embedded in upper voussoir 6 and a lower portion which projects from said upper voussoir 6. Said lower portion of said active reinforcement 8 is housed in an active reinforcement duct 9 made in said lower voussoir 5. One face of said lower voussoir 5 includes a hole 11 in correspondence with the distal end of said lower portion of said active reinforcement 8, said hole 11 having a depth such that it extends to said active reinforcement duct 9 in correspondence with said distal end of said lower portion of said active reinforcement 8. Said hole 11 provides access to a plurality of tightening means applied to said distal end of said lower portion of said active reinforcement 8 against one supporting face of said hole 11. Said tightening means are similar to tightening means 14, 16 of the device shown in Figure 3, cross-section II-II, and consist of an anchor plate and a clamp with a key for anchoring the cable.

Said hole 11 also enables to inject a filling material in the form of mortar 12, which fills said hole 11. Optionally active reinforcement duct 9 and ring 17 formed between said lower voussoir and upper voussoir 6 may also be filled with mortar from said hole 11. Said mortar 12 may also be intruded through a separate ring 17.

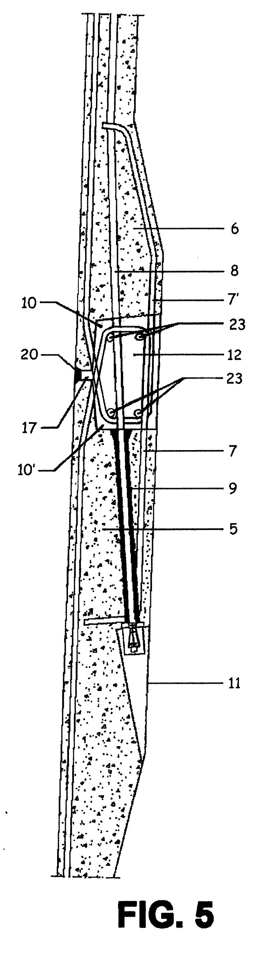

As can be seen from Figure 5, both in section I'-I' and section II'-II', the horizontal wet joint represented may have a radially inclined development and includes a sealing profile 20 which delimits said ring 17 close to the lowest end of said development so as to contain such mortar 12.

Figure 5 shows a longitudinal section of an assembly of the socket-projection fixing device with passive internal reinforcement and the socket-projection fixing device with active internal reinforcement as an alternative to the socket-projection fixing devices shown in Figure 3.

Specifically Figure 5 shows a device with two passive reinforcements 7, 7' and an active reinforcement 8 for fixing a lower voussoir 5 prefabricated on a concrete base for the erection of wind turbine towers and an upper voussoir 6 prefabricated on a concrete base for the erection of wind turbine towers.

One of said passive reinforcements 7, in the form of a fork, is partially embedded in said lower voussoir 5 so that said passive reinforcement 7 has a lower portion actually embedded in said lower voussoir 5 and an upper portion which projects from said lower voussoir 5. Said upper portion of said passive reinforcement 7 is housed in a duct which is in this case in the form of cavity 10 made in said upper voussoir 6. Another of said passive reinforcements 7', in the form of a fork, is partially embedded in said lower voussoir 6 so that said passive reinforcement 7' has an upper portion actually embedded in said upper voussoir 6 and a lower portion which projects from said upper voussoir 6. Said lower portion of said passive reinforcement 7' is housed in a duct which is in this case in the form of cavity 10' made in said lower voussoir 5. Said passive reinforcements 7, 7' are juxtaposed laterally and said cavities 10, 10' are located symmetrically relative to the plane of the horizontal wet joint shown.

A filling material, in the form of mortar 12, fills said cavities 10, 10', said passive reinforcements 7, 7' being anchored to both lower voussoir 5 and upper voussoir 6. Said passive reinforcements, 7, 7' also include four rods 23 located horizontally against the trough of said passive reinforcements 7, 7' to improve the anchoring of said passive reinforcements 7, 7' to mortar 12.

Said active reinforcement 8, in the form of a pre-tensioning cable, is partially embedded in said upper voussoir 6 so that said active reinforcement 8 has an upper portion actually embedded in said upper voussoir 6 and a lower portion which projects from said upper voussoir 6. Said lower portion of said active reinforcement 8 is housed in a active reinforcement duct 9 made in said lower voussoir 5 in correspondence with said cavity 10'. One face of said lower voussoir 5 includes a hole 11 in correspondence with the threaded distal end of said lower portion of said active reinforcement 8, said hole 11 having a depth such that it extends to said active reinforcement duct 9 in correspondence with said distal end of said lower portion of said active reinforcement 8. Said hole 11 provides access to a plurality of tightening means applied to said threaded distal end of said lower portion of said active reinforcement 8 against a support face of said hole 11. Said tightening means are similar to means 14, 16 for anchoring the device shown in Figure 3, cross-section II-II, and consist of an anchor plate and a clamp with key for anchoring the cable

Since said active reinforcement duct 9 is made in said lower voussoir 5 in correspondence with said cavity 10', said mortar 12 also fills said active reinforcement duct 9. It must be noted that said active reinforcement 8 is sheathed so that it does not adhere to mortar 12 and can be subsequently tightened after said mortar 12 has set

The horizontal wet joint shown also includes a sealing profile 20 which delimits said ring 17 at the radial end of said ring 17 opposing said cavities 10, 10'.

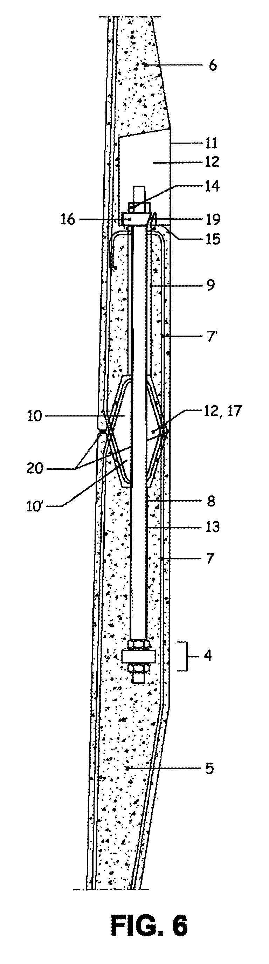

Figure 6 shows a longitudinal section of an additional assembly of the socket-projection fixing device with passive internal reinforcement and the socket-projection fixing device with active internal reinforcement as an alternative to the socket-projection fixing devices in Figure 3.

Specifically, Figure 6 shows a device with two passive reinforcements 7, 7' and an active reinforcement 8 for fixing a lower voussoir 5 prefabricated on a concrete base for the erection of wind turbine towers and an upper voussoir 6 prefabricated on a concrete base for the erection of wind turbine towers.

One of said passive reinforcements 7, in the form of a fork, is partially embedded in said lower voussoir 5 so that said passive reinforcement 7 has a lower portion actually embedded in said lower voussoir 5 and an upper portion which projects from said lower voussoir 5. Said upper portion of said passive reinforcement 7 is housed in a passive reinforcement duct 10 made in said upper voussoir 6. Another of said passive reinforcements 7', in the form of a fork, is partially embedded in said upper voussoir 6 so that said passive reinforcement 7' has an upper portion actually embedded in said upper voussoir 6 and a lower portion which projects from said upper voussoir 6. Said lower portion of said passive reinforcement 7' is housed in a passive reinforcement duct 10' made in said lower voussoir 5. Said passive reinforcements 7, 7' are juxtaposed laterally and said ducts 10, 10' are located symmetrically in relation to the plane of the horizontal wet joint shown.

Said active reinforcement 8, in the form of a bar or bolt with threaded ends, is partially embedded in said lower voussoir 5 so that said active reinforcement 8 has a lower portion actually embedded in said lower voussoir 5 and an upper portion which projects from said lower voussoir 5. Said upper portion of said active reinforcement 8 is housed in an active reinforcement duct 9 made in said upper voussoir 6 in correspondence with said ducts 10, 10'. One face of said upper voussoir 6 includes a hole 11 in correspondence with the threaded distal end of said upper portion of said active reinforcement 8, said hole 11 having a depth such that it extends to said active reinforcement duct 9 in correspondence with said threaded distal end of said upper portion of said active reinforcement 8. Said hole 11 provides access to a plurality of tightening means 14, 16 applied to said threaded distal end of said upper portion of said active reinforcement 8 against a supporting face 15 of said hole 11. Said tightening means are similar to means 14, 16 for tightening the device in Figure 3, cross-section II-II, and consist of an anchor plate and a clamp with a key for anchoring the cable.

Said device with active reinforcement 8 also comprises a plurality of anchoring means 4 applied in a fixed manner to the threaded distal end of said lower portion of said active reinforcement 8 and a sheath 13 arranged around said lower portion of said active reinforcement 8 so that said active reinforcement 8 can be expanded or shrunk inside said sheath 13 and inside said active reinforcement duct 9 by actuating said nut 14 for tightening said active reinforcement 8.

Said hole 11 also allows the introduction of a filling material in the form of mortar 12 which, since said active reinforcement duct 9 is made in said upper voussoir 6 in correspondence with said ducts 10, 10', it fills said hole 11, said active reinforcement duct 9, said ducts 10, 10' and ring 17 formed between said lower voussoir 5 and upper voussoir 6, said active reinforcement 8 being anchored to said upper voussoir 6 also by said mortar 12 and said passive reinforcements 7, 7' being anchored to both lower voussoir 5 and upper voussoir 6. It must be noted that said active reinforcement 8 is sheathed so that it does not adhere to mortar 12 and can be tightened later when said mortar 12 has set.

As can be seen in Figure 6, the horizontal wet joint shown includes two sealing profiles 20 which delimit said ring 17, which profiles contain said mortar 12.

Obviously, the principle of the invention remaining the same, the embodiments and design details may widely vary from those described and illustrated purely by way of non-limiting example, without thereby departing from the scope of the invention as defined in the attached claims.

Specifically, by way of non-limiting illustration, devices with an active reinforcement and devices with a passive reinforcement of any type may be used in the same horizontal wet joint, combining them whether they are of the same type or of a different type.

## Claims

1. An internally reinforced, socket-projection fixing assembly for a horizontal wet joint (3) formed between two cylindrical prefabricated concrete sections (2, 2'), for a wind turbine tower, which assembly comprises at least one socket-projection fixing device with active internal reinforcement (8), so that said active internal reinforcement (8) includes an embedded portion which is embedded in a first section (2; 2') of said cylindrical sections, and a projecting portion which projects from said first section (2; 2') and is housed in a duct (9; 10) in a second section (2'; 2) of said cylindrical sections, whereby said active internal reinforcement (8) includes tightening means (14, 16) which are arranged in said projecting portion of said active internal reinforcement (8) and against a supporting surface (15) of one (2; 2') of said cylindrical sections so that said active internal reinforcement (8) is anchored to said supporting surface (15) and is tightened by means of said tightening means (14, 16), **characterised in that** said assembly further comprises at least one socket-projection fixing device with passive internal reinforcement (7) so that said passive internal reinforcement (7) includes an embedded portion which is embedded in a first section (2; 2') of said cylindrical sections, and a projecting portion which projects from said first section (2; 2') and is housed in a duct (9; 10) in a second section (2'; 2) of said cylindrical sections, and **in that** said passive internal reinforcement (7) includes cured material (12) which is arranged at least partially around said projecting portion of said passive internal reinforcement (7) and adheres to the inside of passive reinforcement duct (10) in which is arranged said projecting portion of said passive internal reinforcement (7).

2. The socket-projection fixing assembly according to Claim 1, **characterised in that** at least one (2, 2') of said first and second sections is formed by voussoirs (5, 6).

3. The socket-projection fixing assembly according to any one of the preceding claims, **characterised in that** said cylindrical sections (2, 2') comprise voussoirs (5, 6) and **in that** said socket-projection fixing assembly comprises a number of socket-projection fixing devices with active internal reinforcement (8), which is at the same time a multiple of the number of voussoirs (5; 6) in the first section, a multiple of the number of voussoirs (6; 5) in the second section and the divisor of the total number of socket-projection fixing devices with active reinforcement (8) and with passive reinforcement (7).

4. The socket-projection fixing assembly according to any one of the preceding claims, **characterised in that** said tightening means comprise a nut (14) which is threaded onto a threaded end of said active internal reinforcement (8) and which is tightened against said supporting surface (15).

5. The socket-projection fixing assembly according to Claim 4, **characterised in that** said nut (14) is tightened against said supporting surface (15) with the insertion of an anchor plate (16) and/or a curable material (12).

6. The socket-projection fixing assembly according to Claim 4, **characterised in that** said nut (14) is tightened against said supporting surface (15) with the insertion of an anchor plate (16), **in that** said second section (2; 2') is arranged above said first section (2'; 2), and **in that** said anchor plate (16) comprises at least one bore (19) which acts as a drain pipe for the air outlet.

7. The socket-projection fixing assembly according to any one of the preceding claims, **characterised in that** said passive reinforcement duct (10) receives said projecting portion of said passive internal reinforcement (7) and **in that** said passive reinforcement duct (10) is filled with curable material (12).

8. The socket-projection fixing assembly according to any one of the preceding claims, **characterised in that** said second section (2; 2') has a working facing which includes at least one hole (11) in correspondence with the distal end of a projecting portion of an active internal reinforcement (8), said hole (11) having a depth such that it at least extends to the respective active internal reinforcement duct (9) in correspondence with said distal end of said projecting portion of said active internal reinforcement (8) and having such dimensions that they enable the respective tightening means (14, 16) to be housed in the interior of said hole (11).

9. The socket-projection fixing assembly according to Claim 8, **characterised in that** the respective supporting surface (15) is located on the inner wall of said hole (11).

10. The socket-projection fixing assembly according to Claim 7, **characterised in that** said second section (2; 2') is arranged above said first section (2'; 2) and **in that** said second section (2; 2') has a working facing which includes at least one hole (11) in correspondence with the distal end of a projecting portion of a passive internal reinforcement (7), said hole (11) having a depth such that it at least extends to the respective passive reinforcement duct (10) in correspondence with said distal end of said projecting portion of said passive internal reinforcement (7).

11. The socket-projection fixing assembly according to any one of the preceding Claims 8 to 10, **characterised in that** said hole (11) is not opened by the facing opposing the working facing.

12. The socket-projection fixing assembly according to any one of the preceding Claims 8 to 11, **characterised in that** said working facing is the facing orientated towards the inner space enclosed by said second section (2; 2').

13. A method for installing a socket-projection fixing assembly according to any one of the preceding claims, which includes the steps of:
a) providing a first cylindrical prefabricated section of concrete for a wind turbine tower and a second cylindrical prefabricated concrete section (2'; 2) for a turbine tower (1),
b) installing said first and second cylindrical sections (2, 2') within a mutual coaxial relationship so that said projecting portions (7, 8) of said internal reinforcements and said corresponding ducts (10, 9) face each other and are aligned with each other,
c) bringing said first and second cylindrical sections closer together so that said projecting portions of said internal reinforcements (7, 8) are housed in said corresponding ducts (10, 9) until said first and second cylindrical sections (2, 2') are adjacent to each other,
d) applying said tightening means (14, 16) to the active reinforcement(s) (8),
e) applying curable material (12) to the passive reinforcement(s) (7),
f) stretching the active reinforcement(s) (8) by tightening said tightening means (14, 16);
whereby
in step f) said active reinforcement(s) (8) are tightened by tightening said tightening means (14, 16) so that said horizontal wet joint (3) is subjected to a partial pre-tensioning.

14. The method of installation according to Claim 13, **characterised in that** it also includes the application of a curable material (12) to a ring (17) formed between said first and second cylindrical sections (2, 2').

15. The method of installation according to Claim 13, **characterised in that** said step d) also includes the application of curable material (12) to a ring (17) formed between said first and second cylindrical sections (2, 2').

16. The method of installation according to any one of Claims 13 to 15, **characterised in that** said step c) also includes the use of a protective cover for the distal end of at least one reinforcement (7, 8).

17. The method of installation according to Claim 16, **characterised in that** said protective cover is conical in shape.

## Patentansprüche

1. Innenverstärkte Ausnehmung-Vorsprung-Fixieranordnung für eine zwischen zwei zylindrischen, vorgefertigten Betonierabschnitten (2; 2') gebildete horizontale nasse Fuge (3) für den Turm einer Windenergieanlage, wobei die Anordnung mindestens eine Ausnehmung-Vorsprung-Fixiervorrichtung mit einer aktiven Innenverstärkung (8) umfasst, sodass die besagte aktive Innenverstärkung (8) einen eingebetteten Teil, der in einem ersten Abschnitt (2, 2') der besagten zylindrischen Abschnitte eingebettet ist, und einen vorspringenden Teil, der aus dem besagten ersten Abschnitt (2, 2') vorspringt und von einem Kanal (9; 10) in einem zweiten Abschnitt (2'; 2) der besagten zylindrischen Abschnitte aufgenommen wird, einschließt, wobei die besagte aktive Innenverstärkung (8) Spannmittel (14, 16) einschließt, die im besagten vorspringenden Teil der besagten aktiven Innenverstärkung (8) gegen eine Stützfläche (15) von einem (2; 2') der besagten zylindrischen Abschnitte angeordnet sind, sodass die besagte aktive Innenverstärkung (8) an der besagten Stützfläche (15) verankert ist und durch besagte Spannmittel (14, 16) angezogen wird, **dadurch gekennzeichnet, dass** die besagte Anordnung weiterhin mindestens eine Ausnehmung-Vorsprung-Fixiervorrichtung mit einer passiven Innenverstärkung (7) umfasst, sodass die besagte passive Innenverstärkung (7) einen eingebetteten Teil, der in einem ersten Abschnitt (2; 2') der besagten zylindrischen Abschnitte eingebettet ist, und einen vorspringenden Teil, der aus dem besagten ersten Abschnitt (2; 2') vorspringt und von einem Kanal (9; 10) in einem zweiten Abschnitt (2'; 2) der besagten zylindrischen Abschnitte aufgenommen wird, einschließt und dass die besagte passive Innenverstärkung (7) ausgehärtetes Material (12) einschließt, das zumindest teilweise um den besagten vorspringenden Teil der besagten passiven Innenverstärkung (7) angeordnet ist und an die Innenseite des passiven Verstärkungskanals (10), in dem der besagte vorspringende Teil der besagten passiven Innenverstärkung (7) angeordnet ist, anhaftet.

2. Ausnehmung-Vorsprung-Fixieranordnung nach Anspruch 1, **dadurch gekennzeichnet, dass** mindesten einer (2, 2') der besagten ersten und zweiten Abschnitte aus Wölbsteinen (5, 6) gebildet wird.

3. Ausnehmung-Vorsprung-Fixieranordnung nach irgendeinem der vorhergehenden Ansprüche, **dadurch gekennzeichnet, dass** die besagten zylindrischen Abschnitte (2, 2') Wölbsteine (5, 6) umfassen und dass die besagte Ausnehmung-Vorsprung-Fixieranordnung eine Anzahl Ausnehmung-Vorsprung-Fixiervorrichtungen mit einer aktiven Innenverstärkung (8) umfasst, die gleichzeitig ein Vielfaches der Anzahl an Wölbsteinen (5; 6) im ersten Abschnitt, ein Vielfaches der Anzahl an Wölbsteinen (6; 5) im zweiten Abschnitt und der Divisor der Gesamtanzahl der Ausnehmung-Vorsprung-Fixiervorrichtungen mit aktiver Verstärkung (8) und mit passiver Verstärkung (7) ist.

4. Ausnehmung-Vorsprung-Fixieranordnung nach irgendeinem der vorhergehenden Ansprüche, **dadurch gekennzeichnet, dass** die besagten Spannmittel eine Schraubenmutter (14) umfassen, die auf ein Gewindeende der besagten aktiven Innenverstärkung (8) aufgeschraubt und gegen besagte Stützfläche (15) angezogen wird.

5. Ausnehmung-Vorsprung-Fixieranordnung nach Anspruch 4, **dadurch gekennzeichnet, dass** die besagte Schraubenmutter (14) durch Einfügen einer Ankerplatte (16) und/oder eines härtbaren Materials (12) gegen die besagte Stützfläche (15) angezogen wird.

6. Ausnehmung-Vorsprung-Fixieranordnung nach Anspruch 4, **dadurch gekennzeichnet, dass** die besagte Schraubenmutter (14) durch Einfügen einer Ankerplatte (16) gegen die besagte Stützfläche (15) angezogen wird, dass der besagte zweite Abschnitt (2; 2') über dem besagten ersten Abschnitt (2'; 2) angeordnet ist und dass die besagte Ankerplatte (16) mindestens eine Bohrung (19) umfasst, die als Ablassleitung für den Luftaustritt dient.

7. Ausnehmung-Vorsprung-Fixieranordnung nach irgendeinem der vorhergehenden Ansprüche, **dadurch gekennzeichnet, dass** der besagte passive Verstärkungskanal (10) den besagten vorspringenden Teil der besagten passiven Innenverstärkung (7) aufnimmt und dass der besagte passive Verstärkungskanal (10) mit härtbarem Material (12) gefüllt ist.

8. Ausnehmung-Vorsprung-Fixieranordnung nach irgendeinem der vorhergehenden Ansprüche, **dadurch gekennzeichnet, dass** der besagte zweite Abschnitt (2; 2') eine Arbeitsfläche aufweist, die mindestens einen Hohlraum (11) einschließt, der dem distalen Ende eines vorspringenden Teils einer aktiven Innenverstärkung (8) entspricht, wobei der besagte Hohlraum (11) so tief ist, dass er sich dem besagten distalen Ende des besagten vorspringenden Teils der besagten aktiven Innenverstärkung (8) entsprechend mindestens bis zum jeweiligen aktiven Innenverstärkungskanal (9) erstreckt, und solche Abmessungen aufweist, dass die jeweiligen Spannmittel (14, 16) im Innern des besagten Hohlraums (11) untergebracht werden können.

9. Ausnehmung-Vorsprung-Fixieranordnung nach Anspruch 8, **dadurch gekennzeichnet, dass** sich die jeweilige Stützfläche (15) an der Innenwand des besagten Hohlraums (11) befindet.

10. Ausnehmung-Vorsprung-Fixieranordnung nach Anspruch 7, **dadurch gekennzeichnet, dass** der besagte zweite Abschnitt (2; 2') über dem besagten ersten Abschnitt (2'; 2) angeordnet ist und dass der besagte zweite Abschnitt (2; 2') eine Arbeitsfläche aufweist, die mindestens einen Hohlraum (11) einschließt, der dem distalen Ende eines vorspringenden Teils einer passiven Innenverstärkung (7) entspricht, wobei der besagte Hohlraum (11) so tief ist, dass er sich dem besagten distalen Ende des besagten vorspringenden Teils der besagten passiven Innenverstärkung (7) entsprechend mindestens bis zum jeweiligen passiven Verstärkungskanal (10) erstreckt.

11. Ausnehmung-Vorsprung-Fixieranordnung nach irgendeinem der vorhergehenden Ansprüche 8 bis 10, **dadurch gekennzeichnet, dass** der besagte Hohlraum (11) nicht durch die der Arbeitsfläche gegenüberliegende Fläche geöffnet wird.

12. Ausnehmung-Vorsprung-Fixieranordnung nach irgendeinem der vorhergehenden Ansprüche 8 bis 11, **dadurch gekennzeichnet, dass** die besagte Arbeitsfläche diejenige Fläche ist, die dem Innenraum, der vom besagten zweiten Abschnitt (2; 2') eingeschlossen wird, zugewendet ist.

13. Verfahren zum Installieren einer Ausnehmung-Vorsprung-Fixieranordnung nach irgendeinem der vorhergehenden Ansprüche, das folgende Schritte einschließt:
a) Bereitstellen eines ersten vorgefertigten, zylindrischen Betonierabschnitts für den Turm einer Windenergieanlage und eines zweiten vorgefertigten, zylindrischen Abschnitts (2'; 2) für den Turm einer Windenergieanlage (1),
b) Installieren der besagten ersten und zweiten zylindrischen Abschnitte (2, 2') in einer koaxialen Ausrichtung zueinander, sodass sich die besagten vorspringenden Teile (7, 8) der besagten Innenverstärkungen und die entsprechenden Kanäle (10, 9) gegenüberstehen und miteinander decken,
c) Annähern der besagten ersten und zweiten zylindrischen Abschnitte zueinander, sodass die besagten vorspringenden Teile der besagten Innenverstärkungen (7, 8) von den besagten entsprechenden Kanälen (10, 9) aufgenommen werden, bis die besagten ersten und zweiten zylindrischen Abschnitte (2, 2') aneinander anliegen,
d) Anbringen der besagten Spannmittel (14, 16) an die aktive(n) Verstärkung(en) (8),
e) Auftragen eines härtbaren Materials (12) auf die passive(n) Verstärkung(en) (7),
f) Dehnen der aktiven Verstärkung(en) (8) durch Anziehen der besagten Spannmittel (14, 16),
wobei in Schritt f) die besagte(n) aktive(n) Verstärkung(en) (8) durch Anziehen der besagten Spannmittel (14, 16) derart angezogen werden, dass die besagte horizontale nasse Fuge (3) einem partiellen Vorspannen unterzogen wird.

14. Installationsverfahren nach Anspruch 13, **dadurch gekennzeichnet, dass** es außerdem das Auftragen eines härtbaren Materials (12) auf einen zwischen dem besagten ersten und zweiten zylindrischen Abschnitt (2, 2') gebildeten Ring (17) einschließt.

15. Installationsverfahren nach Anspruch 13, **dadurch gekennzeichnet, dass** der besagte Schritt d) außerdem das Auftragen eines härtbaren Materials (12) auf einen zwischen dem besagten ersten und zweiten zylindrischen Abschnitt (2, 2') gebildeten Ring (17) einschließt.

16. Installationsverfahren nach irgendeinem der Ansprüche 13 bis 15, **dadurch gekennzeichnet, dass** der besagte Schritt c) außerdem die Verwendung einer Schutzabdeckung für das distale Ende der mindestens einen Verstärkung (7, 8) einschließt.

17. Installationsverfahren nach Anspruch 16, **dadurch gekennzeichnet, dass** die besagte Schutzabdeckung kegelförmig ist.

## Revendications

1. Un assemblage de fixation à emboîture en projection, intérieurement renforcé, pour un joint humide horizontal (3) formé entre deux sections cylindriques en béton préfabriqué (2, 2'), pour une tour d'éolienne, cet assemblage comprend au moins un dispositif de fixation à emboîture en projection avec renfort interne actif (8), pour que ledit renfort interne actif (8) comprenne une portion encastrée qui est encastrée dans une première section (2, 2') desdites sections cylindriques, et une portion en projection qui se projette à partir de ladite première section (2, 2') et est logée dans un conduit (9, 10) dans une seconde section (2', 2) desdites sectioris cylindriques, par lequel ledit renfort interne actif (8) comprend des moyens de serrage (14, 16) qui sont disposés dans ladite portion en projection dudit renfort interne actif (8) et contre une surface de support (15) de l'une (2, 2') desdites sections cylindriques pour que ledit renfort interne actif (8) soit ancré à ladite surface de support (15) et soit serré au moyen desdits moyens de serrage (14, 16), **caractérisé en ce que** ledit assemblage comprend en outre au moins un dispositif de fixation à emboîture en projection avec renfort interne passif (7) pour que ledit renfort interne passif (7) comprenne une portion encastrée qui est encastrée dans une première section (2, 2') desdites sections cylindriques, et une portion en projection qui se projette à partir de ladite première section (2, 2') et est logée dans un conduit (9, 10) dans une seconde section (2', 2) desdites sections cylindriques, et **en ce que** ledit renfort interne passif (7) comprend un matériau durci (12) qui est disposé au moins partiellement autour de ladite portion en projection dudit renfort interne passif (7) et adhère à l'intérieur du conduit de renfort passif (10) dans lequel est disposée ladite portion en projection dudit renfort interne passif (7).

2. L'assemblage de fixation à emboîture en projection selon la revendication 1, **caractérisé en ce qu'**au moins l'une (2, 2') desdites première et seconde sections est formée par des voussoirs (5, 6).

3. L'assemblage de fixation à emboîture en projection selon n'importe laquelle des revendications précédentes, **caractérisé en ce que** lesdites sections cylindriques (2, 2') comprennent des voussoirs (5, 6) et **en ce que** ledit assemblage de fixation à emboîture en projection comprend un certain nombre de dispositifs de fixation à emboîture en projection avec renfort interne actif (8), qui est en même temps un multiple du nombre de voussoirs (5, 6) dans la première section, un multiple du nombre de voussoirs (6, 5) dans la seconde section et le diviseur du nombre total de dispositifs de fixation à emboîture en projection avec renfort interne actif (8) et avec renfort passif (7).

4. L'assemblage de fixation à emboîture en projection selon n'importe laquelle des revendications précédentes, **caractérisé en ce que** lesdits moyens de serrage comprennent un écrou (14) qui est vissé sur une extrémité filetée dudit renfort interne actif (8) et qui est serré contre ladite surface de support (15).

5. L'assemblage de fixation à emboîture en projection selon la revendication 4, **caractérisé en ce que** ledit écrou (14) est serré contre ladite surface de support (15) avec l'insertion d'une plaque d'ancrage (16) et/ou d'un matériau durcissable (12).

6. L'assemblage de fixation à emboîture en projection selon la revendication 4, **caractérisé en ce que** ledit écrou (14) est serré contre ladite surface de support (15) avec l'insertion d'une plaque d'ancrage (16), **en ce que** ladite seconde section (2, 2') est disposée au-dessus de ladite première section (2', 2), et **en ce que** ladite plaque d'ancrage (16) comprend au moins un alésage (19) qui sert de tuyau de drainage pour la sortie d'air.

7. L'assemblage de fixation à emboîture en projection selon n'importe laquelle des revendications précédentes, **caractérisé en ce que** ledit conduit de renfort passif (10) reçoit ladite portion en projection dudit renfort interne passif (7) et **en ce que** ledit conduit de renfort passif (10) est rempli avec du matériau durcissable (12).

8. L'assemblage de fixation à emboîture en projection selon n'importe laquelle des revendications précédentes, **caractérisé en ce que** ladite seconde section (2, 2') possède un parement de travail qui comprend au moins un orifice (11) en correspondance avec l'extrémité distale d'une portion en projection d'un renfort interne actif (8), ledit orifice (11) ayant une profondeur telle qu'il s'étend au moins jusqu'au conduit de renfort interne actif associé (9) en correspondance avec ladite extrémité distale de ladite portion en projection dudit renfort interne actif (8) et présentant des dimensions telles qu'elles permettent aux moyens de serrage associés (14, 16) d'être logés à l'intérieur dudit orifice (11).

9. L'assemblage de fixation à emboîture en projection selon la revendication 8, **caractérisé en ce que** la surface de support associée (15) est située sur la paroi interne dudit orifice (11).

10. L'assemblage de fixation à emboîture en projection selon la revendication 7, **caractérisé en ce que** ladite seconde section (2, 2') est disposée au-dessus de ladite première section (2', 2) et **en ce que** ladite seconde section (2, 2') possède un parement de travail qui comprend au moins un orifice (11) en correspondance avec l'extrémité distale d'une portion en projection d'un renfort interne passif (7), ledit orifice (11) ayant une profondeur telle qu'il s'étend au moins jusqu'au conduit de renfort passif associé (10) en correspondance avec ladite extrémité distale de ladite portion en projection dudit renfort interne passif (7).

11. L'assemblage de fixation à emboîture en projection selon n'importe laquelle des revendications précédentes 8 à 10, **caractérisé en ce que** ledit orifice (11) n'est pas ouvert du côté du parement faisant face au parement de travail.

12. L'assemblage de fixation à emboîture en projection selon n'importe laquelle des revendications précédentes 8 à 11, **caractérisé en ce que** ledit parement de travail est le parement orienté en direction de l'espace interne clos par ladite seconde section (2, 2').

13. Un procédé pour installer un assemblage de fixation à emboîture en projection selon n'importe laquelle des revendications précédentes, qui comprend les étapes consistant à :
a) fournir une première section cylindrique préfabriquée en béton pour une tour d'éolienne et une seconde section cylindrique préfabriquée en béton (2', 2) pour une tour d'éolienne (1),
b) installer lesdites première et seconde sections cylindriques (2, 2') dans une relation coaxiale réciproque pour que lesdites portions en projection (7, 8) desdits renforts internes et lesdits conduits associés (10, 9) soient l'un en face de l'autre et soient alignés l'un par rapport à l'autre,
c) rapprocher l'une de l'autre lesdites première et seconde sections cylindriques pour que lesdites portions en projection desdits renforts internes (7, 8) soient logées dans lesdits conduits associés (10, 9) jusqu'à ce que lesdites première et seconde sections cylindriques (2, 2') soient adjacentes l'une à l'autre,
d) appliquer lesdits moyens de serrage (14, 16) au(x) renfort(s) actif(s) (8),
e) appliquer le matériau durcissable (12) au(x) renfort(s) passif(s) (7),
f) étirer le(s) renfort(s) actif(s) (8) en serrant lesdits moyens de serrage (14, 16) ;
par lequel dans l'étape f) le(s)dit(s) renfort(s) actif(s) (8) sont serrés en serrant lesdits moyens de serrage (14, 16) pour que ledit joint humide horizontal (3) soit soumis à une pré-tension partielle.

14. Le procédé d'installation selon la revendication 13, **caractérisé en ce qu'**il comprend également l'application d'un matériau durcissable (12) à une bague (17) formée entre lesdites première et seconde sections cylindriques (2, 2').

15. Le procédé d'installation selon la revendication 13, **caractérisé en ce que** ladite étape d) comprend également l'application d'un matériau durcissable (12) à une bague (17) formée entre lesdites première et seconde sections cylindriques (2, 2').

16. Le procédé d'installation selon n'importe laquelle des revendications 13 à 15, **caractérisé en ce que** ladite étape c) comprend également l'utilisation d'une couverture de protection pour l'extrémité distale d'au moins un renfort (7, 8).

17. Le procédé d'installation selon la revendication 16, **caractérisé en ce que** ladite couverture de protection est de forme conique.
